(19) Europäisches Patentamt
European Patent Office
Office européen des brevets

(11) **EP 4 259 695 B1**

(12) **EUROPEAN PATENT SPECIFICATION**

(45) Date of publication and mention
of the grant of the patent:
**07.08.2024 Bulletin 2024/32**

(21) Application number: **20833716.2**

(22) Date of filing: **08.12.2020**

(51) International Patent Classification (IPC):
*C08G 77/18* (2006.01)    *C08G 77/38* (2006.01)
*C08G 77/445* (2006.01)    *C08G 77/00* (2006.01)
*C08L 83/10* (2006.01)

(52) Cooperative Patent Classification (CPC):
**C08G 77/70; C08G 63/6956; C08G 77/18;
C08G 77/38; C08G 77/445; C08G 77/80;
C08L 83/10; C09D 167/02**

(86) International application number:
**PCT/CN2020/134517**

(87) International publication number:
**WO 2022/120566 (16.06.2022 Gazette 2022/24)**

(54) **SILICONE RESIN**

SILIKONHARZ

RÉSINE DE SILICONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.10.2023 Bulletin 2023/42**

(73) Proprietor: **Dow Silicones Corporation
Midland MI 48686-0994 (US)**

(72) Inventors:
• **CHEN, Wenjie
Shanghai 201203 (CN)**
• **SHEN, Guodong
Shanghai 201203 (CN)**
• **LIU, Zhihua
Shanghai 201203 (CN)**
• **ZHU, Jiayin
Shanghai 201203 (CN)**

(74) Representative: **Beck Greener LLP
Fulwood House
12 Fulwood Place
London WC1V 6HR (GB)**

(56) References cited:
**WO-A1-2019/200555**

**Description**

FIELD OF THE INVENTION

The present invention is a silicone resin useful for preparing solid silicone-modified polyesters and a process for preparing a solid silicone-modified polyester using thereof.

INTRODUCTION

Silicone-modified polyesters are frequently used for cookware coatings or coatings for electrical domestic appliance such as steam irons. Silicone-modified polyesters are suitable to be formed into particulates such as flakes or powders suitable for powder coating applications.

Solid silicone-modified polyesters are typically prepared by using polyols, silicone resins, and carboxylic acids or anhydrides thereof as starting materials (for instance as in WO 2019/200555 A1). One approach for producing solid silicone-modified polyesters includes (i) forming a polyester by esterifying a polyol with a carboxylic acid and/or its anhydride, (ii) reacting the resulting polyester obtained from step (i) with a silicone resin typically containing >5% silicon bonded hydroxyl groups or >25% of silicon bonded alkoxy groups by weight based on the weight of the silicone resin (hereinafter "incumbent silicone resin") in the presence of a solvent, and (iii) stripping off the solvent. Due to the use of the solvent, the striping step is required to give the solid silicone-modified polyester, which results in increased manufacturing and equipment cost. Simply elimination of the use of the solvent from step (ii), however, causes gelation of the silicone resin.

To avoid solvent stripping and gelation, another process has been developed, which involves the steps of (i) reacting an incumbent silicone resin with an excessive amount of a polyol, and (ii) reacting the resulting carbinol functional silicone resin obtained from step (i) with an acid compound in the presence of an esterification catalyst. However, the silicone-modified polyesters obtained from this process usually have low silicone concentration, for example, 10% by weight or less, which limits their applications. Increasing the amount of the starting material silicone resin causes gelation during the process which makes it not suitable for industrial manufacture of solid silicone-modified polyesters.

It is desirable to discover a silicone resin that can be used in preparing solid silicone-modified polyesters without the aforementioned problems.

SUMMARY OF THE INVENTION

The present invention solves the problem of discovering a silicone resin that can be used in preparing solid silicone-modified polyesters without the aforementioned problems.

The present invention provides a novel silicone resin useful as an intermediate for producing a solid silicone-modified polyester. The present invention also provides a novel process for preparing a solid silicone-modified polyester using the silicone resin of the present invention without the gelation issue. The process of the present invention can be conducted in the absence of a solvent, thus the process does not require an extra stripping procedure to remove the solvent. The solid silicone-modified polyester prepared by the process is particularly suitable for powder coating applications.

In a first aspect, the present invention provides a silicone resin of formula (I):

$$(RSiO_{3/2})_a (R_2SiO_{2/2})_b (R_3SiO_{1/2})_c (SiO_{4/2})_d (XO_{1/2})_e (HO_{1/2})_g \qquad (I)$$

where each R is independently a monovalent hydrocarbon group having from 1 to 30 carbon atoms,
each X is independently an alkyl group having from 1 to 5 carbon atoms,
$a>0$, $b \geq 0$, $c>0$, $d{\geq}0$, $e>0$, $g{\geq}0$, $a/(a+b+c+d)$ is from 0.5 to 0.9, $b/a$ is from 0 to 1, $c/a$ is from 0.1 to 1, $d/a$ is from 0 to 0.25, and $e/(a+b+c+d)$ is from 0.2 to 2;
wherein the silicone resin has an average number of silicon bonded alkoxy groups and silicon bonded hydroxyl groups per molecule in the range of from 2 to 4 and comprises less than 2% of silicon bonded hydroxyl groups, by weight based on the weight of the silicone resin;
with the proviso that 50 mol% or more of silicon atoms in the silicone resin are connected to an aryl group.

In a second aspect, the present invention provides a process for preparing a solid silicone-modified polyester. The process comprises:

(i) condensing the silicone resin of the first aspect ("starting material (a)") and a polyol ("starting material (b)") to form a carbinol functional silicone resin; and

(ii) esterifying the carbinol functional silicone resin obtained from step (i) with starting material (c) selected from a group consisting of a polycarboxyl functional compound, an anhydride thereof, or mixtures thereof, thus forming a solid hydroxyl functional silicone-modified polyester having a hydroxyl value of from 20 to 120 milligrams of potassium hydroxide per gram sample (mg KOH/g) and an acid value of less than 5 mg KOH/g.

## DETAILED DESCRIPTION OF THE INVENTION

"Solid" herein means a resin or a composition is solid at room temperature (23±2 degrees Celsius (°C)).

"Alkyl" herein means a cyclic, branched, or unbranched, saturated monovalent hydrocarbon group.

"Aryl" herein means a cyclic, fully unsaturated, hydrocarbon group.

"Aralkyl" herein means an alkyl group having a pendant and/or terminal aryl group or an aryl group having a pendant alkyl group.

The silicone resin of the present invention has formula (I):

$$(RSiO_{3/2})_a\ (R_2SiO_{2/2})_b\ (R_3SiO_{1/2})_c\ (SiO_{4/2})_d\ (XO_{1/2})_e\ (HO_{1/2})_g, \qquad\qquad (I)$$

where each R is independently a monovalent hydrocarbon group having from 1 to 30 carbon atoms, each X is independently an alkyl group having from 1 to 5 carbon atoms, and $a>0$, $b \geq 0$, $c>0$, $d\geq0$, $e>0$, $g\geq0$, $a/(a+b+c+d)$ is from 0.5 to 0.9, $b/a$ is from 0 to 1, $c/a$ is from 0.1 to 1, $d/a$ is from 0 to 0.25, and $e/(a+b+c+d)$ is from 0.2 to 2.

In formula (I), each R may be the same or different and is independently a monovalent hydrocarbon group of 1 to 30 carbon atoms, from 1 to 12 carbon atoms, or from 1 to 6 carbon atoms, which may be saturated or unsaturated. Suitable monovalent hydrocarbon groups for R can be alkyl groups and aromatic groups such as aryl groups and aralkyl groups, with the proviso that 50 mol% or more of silicon atoms in the silicone resin are connected to one or more aryl group, for example, 52 mol% or more, 55 mol% or more, 58 mol% or more, 60 mol% or more, 62 mol% or more, 65 mol% or more, 68 mol% or more, or even 70 mol% or more, and at the same time, 90 mol% or less, 88 mol% or less, 85 mol% or less, 82 mol% or less, or even 80 mol% or less, of silicon atoms in the silicone resin are connected to one or more aryl group. Alkyl groups may include, for example, methyl, ethyl, propyl (e.g., iso-propyl and/or n-propyl), butyl (e.g., isobutyl, n-butyl, tert-butyl, and/or sec-butyl), pentyl (e.g., isopentyl, neopentyl, and/or tert-pentyl), hexyl, heptyl, octyl, nonyl, and decyl, and branched alkyl groups; and cyclic alkyl groups such as cyclopentyl and cyclohexyl. Preferably, the alkyl group has from 1 to 6 carbon atoms or from 1 to 3 carbon atoms, for example, methyl, ethyl and propyl. Examples of suitable aryl groups include cyclopentadienyl, phenyl, anthracenyl, and naphthyl. Monocyclic aryl groups may have from 5 to 9 carbon atoms, from 6 to 7 carbon atoms, or from 5 to 6 carbon atoms. Polycyclic aryl groups may have 10 to 17 carbon atoms, from 10 to 14 carbon atoms, or from 12 to 14 carbon atoms. Preferred aryl group is phenyl. Suitable aralkyl groups may include, for example, tolyl, xylyl, benzyl, phenylethyl, phenyl propyl, and phenyl butyl. In formula (I), each R may be independently selected from the group consisting of an alkyl group, an aryl group, or mixtures thereof. Preferably, each R is independently selected from methyl and phenyl.

In formula (I), each X is independently an alkyl group having from 1 to 5 carbon atoms, from 1 to 3 carbon atoms, or from 1 to 2 carbon atoms. Suitable X can be methyl, ethyl, propyl, or combinations thereof. Preferably, X is ethyl.

In formula (I), "a" may have a value of 0.5 or more, 0.55 or more, 0.6 or more, 0.65 or more, 0.7 or more, 0.75 or more, or even 0.8 or more, at the same time, 0.9 or less or 0.85 or less.

In formula (I), "b" may have a value of 0.4 or less, 0.3 or less, 0.2 or less, 0.1 or less, or even zero.

In formula (I), "c" may have a value of 0.5 or less, 0.45 or less, 0.4 or less, 0.35 or less, 0.3 or less, 0.25 or less, 0.2 or less, 0.15 or less, or even 0.1 or less.

In formula (I), "e" may have a value of 0.2 or more, 0.22 or more, 0.25 or more, 0.28 or more, 0.3 or more, 0.32 or more, 0.35 or more, 0.38 or more, 0.4 or more, 0.42 or more, 0.45 or more, and at the same time, may have a value of 2 or less, 1.9 or less, 1.8 or less, 1.5 or less, 1.2 or less, 1 or less, 0.9 or less, 0.8 or less, 0.7 or less, 0.6 or less, or even 0.5 or less.

In formula (I), "g" may have a value of 0.2 or less, 0.18 or less, 0.15 or less, 0.12 or less, 0.1 or less, 0.08 or less, 0.05 or less, 0.04 or less, 0.03 or less, 0.02 or less, or even zero.

In formula (I), the value of (a+b+c+d) can be 1.

The silicone resin of the present invention has an average number of silicon bonded alkoxy (that is, OX) groups and silicon bonded hydroxyl (OH) groups per molecule (hereinafter "number average molecular functionality") in the range of 2 or more, 2.1 or more, 2.2 or more, 2.3 or more, 2.4 or more, or even 2.5 or more, and at the same time, 4 or less, 3.9 or less, 3.8 or less, 3.7 or less, 3.6 or less, 3.5 or less, 3.4 or less, 3.3 or less, 3.2 or less, 3.1 or less, or even 3 or less. Preferably, the average number of silicon bonded OH groups per molecule is less than 1, less than 0.8, less than 0.6, less than 0.5, less than 0.4, less than 0.3, less than 0.2, less than 0.15, less than 0.12, less than 0.1, less than 0.05, or even zero. The number average molecular functionality of the silicone resin can be determined by the following equation:

$$\underline{\text{Number average molecular functionality}} = (M_{n(\text{measured})} / M_{w(theoretical)} * (m(OX)) + (M_{n(measured)} / M_{w(theoretical)})*(m(OH)) \qquad \text{(equation 1)},$$

where $M_{n(measured)}$ is the number average molecular weight of the silicone resin as measured by Gel Permeation Chromatography (GPC) analysis as described in the Examples section below, $M_{w(theoretical)}$ is the formula weight of the silicone resin calculated by following formula (I) with certain a, b, c, d, e, and g values, $m(OX)$ is the molar fraction of OX group in formula (I) as calculated by e/(a+b+c+d)*100%, $m(OH)$ is the molar fraction of OH group in formula (I) as calculated by g/(a+b+c+d)*100%, and a, b, c, d, e, and g values are as defined in formula (I). Values for the variables in formula (I) are determined by nuclear magnetic resonance (NMR) described in the Examples section below.

The silicone resin of the present invention may have a number average molecular weight ($M_n$) in the range of from 700 to 2,000 grams per mole (g/mol), for example, 700 g/mol or more, 720 g/mol or more, 750 g/mol or more, 780 g/mol or more, 800 g/mol or more, 820 g/mol or more, 850 g/mol or more, 880 g/mol or more, 900 g/mol or more, 950 g/mol or more, 1,000 g/mol or more, 1,100 g/mol or more, or even 1,200 g/mol or more, and at the same time, 2,000 g/mol or less, 1,900 g/mol or less, 1,800 g/mol or less, 1,700 g/mol or less, 1,600 g/mol or less, 1,500 g/mol or less, 1,400 g/mol or less, or even 1,300 g/mol or less. $M_n$ can be determined according to GPC analysis as described in the Examples section below.

The silicone resin of the present invention may comprise silicon bonded alkoxy groups in an amount of 4.5% or more, 6% or more, 7% or more, 8% or more, 9% or more, 10% or more, 12% or more, or even 15% or more, and at the same time, 25% or less, 24% or less, 23% or less, 22% or less, 21% or less, or even 20% or less, by weight based on the weight of the silicone resin. Weight percentage of silicon bonded alkoxy groups in the silicone resin, $w(OX)$, can be determined according to the following equation:

$$w(OX) = (M_{w(OX)} * e/Mw_{(theoretical)}) * 100\% \qquad \text{(equation 2)}$$

where $M_{w(OX)}$ is the molar mass of OX group, "e" is as defined in formula (I), and $Mw_{(theoretical)}$ is as defined in equation 1 above.

The silicone resin of the present invention may optionally comprise silicon bonded hydroxyl groups (also referred as "silanol groups"). Preferably, the silicone resin is free of (that is, have an absence of) silicon bonded hydroxyl groups. The silicone resin may comprise, by weight based on the weight of the silicone resin, less than 2%, less than 1%, less than 0.7%, less than 0.3%, less than 0.1%, or even zero, of silicon bonded hydroxyl groups. Weight percentage of silicon bonded hydroxyl groups, $w(OH)$, can be determined according to the following equation:

$$w(OH) = (M_{w(OH)} * g/M_{w(theoretical)}) * 100\% \qquad \text{(equation 3)}$$

where $M_{w(OH)}$ is the molar mass of OH group (that is, 17 g/mol), "g" is as defined in formula (I), and $M_{w(theoretical)}$ is as defined in equation 1 above.

The silicone resin of the present invention can be prepared by a process comprising the following steps: (I) hydrolysis of a silane mixture, (II) base equilibrium, (III) neutralization with an acid catalyst and distillation of the resulting alcohols from step (II), and optionally (IV) filtration to get a clear and solid silicone resin.

The silane mixture for preparing the silicone resin of the present invention refers to a mixture comprising one or more silane. The silane mixture useful in the present invention may comprise (a1) one or more silane represented by $R_3SiX^1$, where each R is as defined in formula (I) above, and $X^1$ is a hydrolyzable group such as halogen, alkoxy, or combinations thereof; and (a2) one or more silane and/or siloxane represented by $RSiX^1_3$, where R and $X^1$ are as described above; and optionally (a3) one or more silane and/or siloxane represented by $R_2SiX^1_2$ or $SiX^1_4$, where each R and each $X^1$ are as described above. Examples of suitable (a1) silanes include phenyltrimethoxysilane, phenyltriethoxysilane, or mixtures thereof. Suitable (a2) silanes and siloxanes may include, for example, hexamethyldisiloxane, trimethylmethoxysilane, trimethylethoxysilane, trimethylmethoxysilane, triethylethoxysilane, or mixtures thereof. Examples of suitable (a3) silanes and siloxanes include methyltrimethoxysilane, methyltriethoxysilane, dimethyldimethoxysilane, dimethyldiethoxysilane, methylphenyldimethoxysilane, methylphenyldiethoxysilane, diphenyldimethoxysilane, diphenyldiethoxysilane, octamethylcyclotetrasiloxane, decamethylcyclopentasiloxane, or mixtures thereof.

Preferably, the silicone resin of the present invention is formed from a silane mixture of (a1) phenyltrimethoxysilane, phenyltriethoxysilane, or mixtures thereof; (a2) hexamethyldisiloxane; and optionally (a3) octamethylcyclotetrasiloxane.

In the process for preparing the silicone resin of the present invention, hydrolysis of the silane mixture can be conducted under acidic conditions, for example, in the presence of one or more acid catalyst including, for example, triflic acid, hydrochloric acid, sulfuric acid, or mixtures thereof. The acid catalyst may be present, by weight based on the total weight of the silane mixture, in an amount of from 10 to 1,000 parts per million (ppm) or from 20 to 500 ppm. One or more base catalyst is then added to the resulting silicone hydrolysate obtained from step (I) for base equilibrium, for example, to control the amount of alkoxy groups and optionally, silanol groups if present, of the silicone hydrolysate, followed by neutralization of the base catalyst by the acid catalyst as described above. Examples of suitable base catalysts include potassium hydroxide, sodium hydroxide, or mixtures thereof. The by-product alcohols such as methanol, ethanol, or mixtures thereof, depending on types of silicon bonded alkoxyl groups, can be evaporated after equilibrium, for example, at temperatures of 78 to 150 °C. The salt formed from neutralization may be filtrated to get the silicone resin.

The silicone resin of the present invention is useful as an intermediate (that is, starting material (a)) for preparing a solid silicone-modified polyester such as a hydroxyl functional or carboxyl functional silicone-modified polyester. "Hydroxyl functional silicone-modified polyester" herein refers to a silicone-modified polyester having a hydroxyl value in the range of 20 to 120 milligrams of potassium hydroxide per gram sample (mg KOH/g) and an acid value of less than 5 mg KOH/g. "Carboxyl functional silicone-modified polyester" herein refers to a silicone-modified polyester having an acid value in the range of 10 to 60 mg KOH/g and a hydroxyl value of less than 5 mg KOH/g. Hydroxyl value (OHV) of a silicone-modified polyester in the present invention is determined according to ASTM E222-2010 (Test method B). Acid value of a silicone-modified polyester in the present invention is determined according to ASTM D974-2006.

The present invention also relates to a process for preparing a solid silicone-modified polyester, comprising (i) condensing the silicone resin of the present invention ("starting material (a)") and a polyol ("starting material (b)") to form a carbinol functional silicone resin; and (ii) esterifying the carbinol functional silicone resin obtained from step (i) and starting material (c) selected from a group consisting of a polycarboxyl functional compound, its anhydride, or mixtures thereof, to give a hydroxyl functional silicone-modified polyester, and optionally, (iii) further reacting the hydroxyl functional silicone-modified polyester obtained from step (ii) with starting material (d) one or more anhydride to give a carboxyl functional silicone-modified polyester. "Carbinol functional silicone resin" herein refers to a silicone resin containing one or more carbon bonded hydroxyl (COH) group.

In step (i) of the process for preparing the solid silicone-modified polyester, the silicone resin, that is, starting material (a), may be present, by weight based on the total weight of starting materials, in amount of 20% or more, 21% or more, 22% or more, 23% or more, 24% or more, or even 25% or more, and at the same time, 70% or less, 65% or less, 60% or less, 55% or less 50% or less, 48% or less, 45% or less, 42% or less, 40% or less, 38% or less, or even 35% or less. The total weight of starting materials herein refers to the combined weight of starting materials (a), (b), (c), and (d) if used, where the weight of starting material (d) is only counted when step (iii) is used in the process. That is, when the process only includes the two steps (i) and (ii) for preparing the hydroxyl functional silicone-modified polyester, the total weight of starting materials equals to the combined weight of starting materials (a), (b), and (c).

The polyol, that is, starting material (b), useful in step (i) refers to any compound containing two or more hydroxyl groups, for example, from 2 to 4 hydroxyl groups. The polyol useful in the present invention can be an aliphatic or alicyclic alcohol having 2 or 3 hydroxyl groups and 2 to 6 carbons, including, for example, secondary alcohols, tertiary alcohols, or mixtures thereof. Examples of suitable polyols include ethylene glycol, diethylene glycol, propylene glycol, 1,4-butanediol, 1,3-butanediol, 1,5-butanediol, 1,6-hexanediol, 2-methyl-1,3-propanediol, 2-butyl-2-ethyl-l,3-propanediol, neopentyl glycol, 1,4-cyclohexanediol, trimethylene glycol, glycerin, trimethylolpropane, trimethylolethane, trishydroxyethyl isocyanurate, pentaerythritol, 1,3-, 1,2- and l,4-butanediols, heptanediol, hexanediol, octanediol, 2,2'-bis (4-cyclohexanol)propane, 2,2,3-trimethylpentane-1.3-diol, l,4-dimethylolcyclohexane, 2,2,4-trimethylpentane diol, or mixtures thereof. Preferably, the polyol is neopentyl glycol.

In step (i) of the process for preparing the solid silicone-modified polyester, the polyol starting material (b) may be present in an amount such that a molar ratio of hydroxyl groups in the polyol to total alkoxy groups and hydroxyl groups (if present) in the silicone resin starting material (a) is greater than 2, for example, 2.1 or more, 2.2 or more, 2.5 or more, 2.8 or more, 3 or more, 3.2 or more, 3.5 or more, 3.8 or more, or even 4 or more, and at the same time, 10 or less, 9.5 or less, 9 or less, 8.5 or less, 8 or less, 7.5 or less, 7 or less, 6.5 or less, or even 6 or less. For example, the polyol may be present, by weight based on the total weight of starting materials, in amount of 13% or more, 14% or more, 15% or more, 16% or more, 17% or more, 18% or more, 19% or more, or even 20% or more, and at the same time, 38% or less, 37% or less, 36% or less, 35% or less, 34% or less, 33% or less, 32% or less, 31% or less, or even 30% or less.

In step (i) of the process for preparing the solid silicone-modified polyester, condensation reaction of the silicone resin starting material (a) and the polyol starting material (b) is typically conducted in the presence of one or more condensation catalyst. The condensation catalyst useful in the present invention can be a catalyst including metal ligand complexes. Examples of suitable condensation catalysts include organotitanium compounds such as tetraisopropyl titanate, tetrabutyl titanate, tetraoctyl titanate, titanium acetic acid salts, titanium diisopropoxybis(acetylacetonate), and titanium diisopropoxybis(ethyl acetoacetate); organozirconium compounds such as zirconium tetraacetylacetonate, zirconium hexafluoroacetylacetonate, zirconium trifluoroacetylacetonate, tetrakis(ethyltrifluoroacetylacetonate)zirconium, tetrakis(2,2,6,6 tetramethyl-heptanedionate), zirconium dibutoxybis(ethylacetoacetate), or zirconium diisopropoxybis(2,2,6,6-tetramethyl-heptanedionate); organotin compounds such as dibutyltin dilaurate, dimethyltin dineodecanoate, dibutyltin diacetate, dimethylhydroxy(oleate)tin, dioctyldilauryltin, monobutyltin oxide (MBTO), di-n-butyltin oxide, tetrabutyl titanate (TnBT), or titanium tetraisopropanolate (TPT); or mixtures thereof. The condensation catalyst useful in the present invention may be present in an amount of from 0.01% to 2%, from 0.02% to 1.5%, or from 0.05% to 1%, by weight based on the total weight of starting materials.

In step (i) of the process of the present invention, reaction of the silicone resin starting material (a) and the polyol starting material (b) may be carried out at a temperature of from 120 to 200 °C or from 130 to 170 °C.

The process for preparing the silicone-modified polymer further comprises step (ii) esterifying the carbinol functional silicone resin obtained from step (i) with starting material (c) selected from a group consisting of one or more polycarboxyl functional compound, an anhydride thereof, or mixtures thereof. "Esterifying" herein means reacting to establish an ester functionality, typically in the presence of an esterification catalyst. The polycarboxyl functional compound and its anhydride useful in the present invention can be an aliphatic or aromatic carboxyl acid having 4 to 12 carbons and 2 or more carboxyl groups, an anhydride thereof, or mixtures thereof. Examples of suitable polycarboxyl functional compounds and anhydrides thereof include adipic acid, succinic acid, sebacic acid, terephthalic acid, isophthalic acid, 1,4-cyclohexane dicarboxyl acid, azelaic acid, phthalic acid, dimethyl terephthalate, benzophenone dicarboxylic acid, diphenic acid, 4,4-dicarboxydiphenyl ether, 2,5-pyridine dicarboxylic acid, 2,6-naphthalenedicarboxylic acid, 4-hydroxybenzoic acid, and trimellitic acid; anhydrides thereof such as trimellitic anhydride, maleic anhydride, phthalic anhydride, or acetic anhydride; or mixtures thereof. Preferably, the polycarboxyl functional compounds and anhydrides thereof are selected from the group consisting of isophthalic acid, maleic anhydride, trimellitic anhydride, or mixtures thereof.

In step (ii) of the process for preparing the solid silicone-modified polyester, the polycarboxyl functional compound and anhydride thereof ("starting material (c)") used to react with the carbinol functional silicone resin are present in a sufficient amount so as to form the resultant product comprising the hydroxyl functional silicone-modified polyester, for example, molar ratio of carboxyl functionalities (including alkoxy groups in the silicone resin) to hydroxyl groups is less than 1. The polycarboxyl functional compound and anhydride thereof starting material (c) may be present, by weight based on the total weight of starting materials, in amount of 15% more, 18% or more, 20% or more, 22% or more, 25% or more, 28% or more, or even 30% or more, and at the same time, 60% or less, 58% or less, 55% or less, 50% or less, 45% or less, 40% or less, or even 35% or less. In step (ii) of the process of the present invention, esterification reaction may be conducted at a temperature from 210 to 260 °C or from 220 to 240 °C. The esterification catalyst useful in the present invention may comprise those organotin compounds described above, particularly, monobutyltin oxide (MBTO), di-n-butyltin oxide, tetrabutyl titanate (TnBT), titanium tetraisopropanolate (TPT), or mixtures thereof. The esterification catalyst may be present in an amount of 0.01% or more, 0.02% or more, or even 0.03% or more, and at the same time, 2% or less, 1.5% or less, or even 1% or less, by weight based on the total weight of starting materials.

The hydroxyl functional silicone-modified polyester obtained from step (ii) comprises a reaction product of the carbinol functional silicone resin and the polycarboxyl functional compound and/or anhydride thereof starting material (c). The hydroxyl functional silicone-modified polyester useful in the present invention may have a silicone content of 20% or more, 21% or more, 22% or more, 23% or more, 24% or more, or even 25% or more, and at the same time, 70% or less, 65% or less, 60% or less, 55% or less, 50% or less, 48% or less, 45% or less, 42% or less, 40% or less, 38% or less, or even 35% or less. The silicone content of the hydroxyl functional silicone-modified polyester herein refers to weight percentage and can be calculated by the weight of starting material (a) silicone resin relative to the total weight of starting materials (that is, starting materials (a), (b) and (c)), or measured according to the NMR analysis described in the Examples section below.

The hydroxyl functional silicone-modified polyester useful in the present invention may have a hydroxyl value of 20 mg KOH/g or more, 22 mg KOH/g or more, 25 mg KOH/g or more, 28 mg KOH/g or more, or even 30 mg KOH/g or more, and at the same time, 120 mg KOH/g or less, 110 mg KOH/g or less, 100 mg KOH/g or less, 95 mg KOH/g or less, 90 mg KOH/g or less, 85 mg KOH/g or less, 80 mg KOH/g or less, or even 75 mg KOH/g or less. The hydroxyl functional silicone-modified polyester may have an acid value (AV) of less than 5 mg KOH /g, less than 4 mg KOH/g, less than 2 mg KOH/g, less than 1 mg KOH/g, or even less than 0.5 mg KOH/g.

The process for preparing the silicone-modified polyester may further comprise (iii) reacting the hydroxyl functional silicone-modified polyester obtained from step (ii) with one or more anhydride, that is, "starting material (d)", through esterification reaction. The anhydride starting material (d) in step (iii) may be the same as or different from those anhydrides used in step (ii). Suitable anhydrides may include those described in step (ii) above, particularly, maleic anhydride, trimellitic anhydride, phthalic anhydride, or mixtures thereof. The content of the anhydride starting material (d) used in step (iii) may be adjusted according to the desired acid value of the resulting carboxyl functional silicone-modified polyester. For example, the starting material (d) anhydride may be present, by weight based on the total weight of starting materials, in an amount of 2% or more, 2.5% or more, 3% or more, 3.5% or more, 4% or more, 4.5% or more, or even 5% or more, and at the same time, 10% or less, 9.5% or less, 9% or less, 8.5% or less, or even 8% or less. In step (iii) of the process of the present invention, reaction of the hydroxyl functional silicone-modified polyester and the anhydride can be carried out at temperatures of from 130 to 190 °C or from 140 to 180 °C. The process of the present invention can obtain a homogenous and clear solid carboxyl functional silicone-modified polyester, for example, the carboxyl functional silicone-modified polyester may have a haze of less than 15% or less than 10% according to ASTM D1003-97(c) and/or show a single peak in the GPC analysis as described in the Examples section below. The obtained carboxyl functional silicone-modified polyester may have an acid value of 10 mg KOH/g or more, 15 mg KOH/g or more, 20 mg KOH/g or more, or even 25 mg KOH/g or more, and at the same time, 60 mg KOH/g or less, 55 mg KOH/g or less, 50 mg KOH/g or less, 45 mg KOH/g or less, or even 40 mg KOH/g or less. The carboxyl functional silicone-modified polyester may have a hydroxyl value of less than 5 mg KOH /g, for example, 4 mg KOH/g or less, 3 mg KOH/g or less, 2 mg KOH/g or less, 1 mg KOH/g or less, or even less than 0.5 mg KOH/g.

The process for preparing the solid silicone-modified polyester of the present invention can be conducted in the substantial absence of a solvent. "Substantial absence" refers to 1% or less, 0.5% or less, 0.1% or less, or even zero, of a solvent, by weight based on the total weight of starting materials. The solvent may be an organic solvent such as an aliphatic or aromatic hydrocarbon such as toluene, xylene, hexane, or heptane; a ketone such as acetone, methyl ethyl ketone, or methyl isobutyl ketone; an ester acetate such as ethyl acetate or isobutyl acetate; an ether acetate such as propylene glycol monomethyl ether acetate; or mixtures thereof. The use of the silicone resin of the present invention in the process for preparing the silicone-modified polyester enable the process to be conducted in the substantial absence of the solvent without causing gelation. "Without causing gelation" or "no gelation" means no observable gel particles to the naked eye. Due to the substantial absence of the solvent, the process for preparing the solid silicone-modified polyester does not involve (that is, is free of) an extra stripping procedure for the removal of the solvent. The solid silicone-modified polyester obtained from the process can be formed into a particulate, such as flake or powder, by conventional forming techniques, such as grinding. The solid silicone-modified polyester produced by the process is suitable for use in coating compositions, including powder coating compositions. The coating composition useful in the present invention, particularly a powder coating composition, comprises the above-identified solid silicone-modified polyester as component (A), particularly, the solid silicone-modified polyester has a hydroxyl value of from 20 to 120 mg KOH/g and an acid value of less than 5 mg KOH/g, and a silicone content of from 20% to 70%, by weight based on the weight of the silicone-modified polyester. The solid silicone-modified polyester may be present, by weight based on the total weight of the coating composition, in an amount of 30% or more, 35% or more, 40% or more, 45% or more, 50% or more, or 55% or more, and at the same time, 90% or less, 85% or less, 80% or less, 75% or less, 70% or less, 65% or less, or even 60% or less.

The coating composition useful in the present invention may also comprise one or more solid blocked polyisocyanate crosslinker (B). The solid blocked polyisocyanate crosslinker is typically in the form of powder. Blocked polyisocyanates refer to a polyisocyanate whose isocyanate (NCO) groups are partially or completely masked with a blocking agent, so that the OH/NCO polyaddition reaction is only taken place after heating and removing the blocking agent. Suitable blocking agents include, for example, ε-caprolactam, oxime, or mixtures thereof. Polyisocyanates may include aliphatic diisocyanates such as hexamethylene diisocyanate (HDI), cycloaliphatic diisocyanates such as isophorone diisocyanate (IPDI), 4,4'-diisocyanatodicyclohexylmethane (hydrogenated MDI or HMDI), or mixtures thereof, or combinations of an aliphatic diisocyanate and an cycloaliphatic diisocyanate, e.g., a mixture of HDI and IPDI, or a mixture of HDI and HMDI. Preferably, the solid blocked polyisocyanate crosslinker is selected from the group consisting of a blocked polyisocyanate based on hydrogenated MDI, a blocked polyisocyanate based on a mixture of hydrogenated MDI and HDI, or mixtures thereof.

The solid blocked polyisocyanate crosslinker in the coating composition may be present, by weight based on the total weight of the coating composition, in an amount of 5% or more, 6% or more, 6.5% or more, 7% or more, 7.5% or more, 8% or more, 8.5% or more, 9% or more, 9.5% or more, or even 10% or more, and at the same time, 20% or less, 18% or less, 16% or less, 15.5% or less, 15% or less, 14.5% or less, 14% or less, 13.5% or less, 13% or less, or even 11.5% or less.

The coating composition useful in the present invention may comprise hydroxyl functional polyester (C), which is one or more solid hydroxyl functional polyester that is free of silicon atom. The hydroxyl functional polyester (C) is useful as an adhesion promoter and is an esterification product of a polyol and a polycarboxyl functional compound and/or its anhydride. The polyol and polycarboxyl functional compound and/or its anhydride used herein may include the (b) polyol and (c) polycarboxyl functional compound and/or its anhydride used in the process for preparing the solid silicone-modified polymer section above. The hydroxyl functional polyester (C) may have an OH value of 50 mg KOH/g or more, 55 mg KOH/g or more, 60 mg KOH/g or more, 70 mg KOH/g or more, or even 80 mg KOH/g or more, and at the same time, 120 mg KOH/g or less, 110 mg KOH/g or less, or even 100 mg KOH/g or less, as measured according to ASTM E222-2010 (Test method B). The hydroxyl functional polyester (C) may have an acid value less than 5 mg KOH/g, 2 mg KOH/g, 1 mg KOH/g or less, or even zero, as measured according to ASTM D974-2006.

The hydroxyl functional polyester (C) in the coating composition may be present, by weight based on the total weight of the coating composition, in an amount of 1% or more, 1.5% or more, 2% or more, 2.5% or more, 3% or more, 3.5% or more, or even 4% or more, and at the same time, 10% or less, 9.5% or less, 9% or less, 8.5% or less, 8% or less, 7.5% or less, or even 7% or less.

The coating composition useful in the present invention may comprise pigment (D), which is one or more pigment useful for providing color. Suitable pigments may include, for example, iron oxide, carbon black, titanium oxide, cobalt aluminate clue, cobalt titanate green, copper chromite black, iron chrome brown, zinc ferrites yellow, or mixtures thereof. The pigment (D) may be present, by weight based on the total weight of the coating composition, in an amount of zero or more, 1% or more, 2% or more, 3% or more, 4% or more, or even 5% or more, and at the same time, 20% or less, 18% or less, 15% or less, 12% or less, or even 10% or less.

The coating composition useful in the present invention may comprise filler (E), which is one or more filler, which is typically used to increase strength, viscosity, and/or opacity of coatings. Suitable fillers may include mica, talc, kaolin, glass powder, barium sulfate, calcium carbonate, or mixtures thereof. The filler (E) may be present, by weight based on the total weight of the coating composition, in an amount of zero or more, 5% or more, 10% or more, 15% or more, or even 20% or more, and at the same time, 50% or less, 45% or less, 40% or less, 35% or less, or even 30% or less.

Preferably, the coating composition useful in the present application comprises, by weight based on the total weight of the coating composition, (A) from 30% to 80% of the solid silicone-modified polyester, wherein the solid silicone-modified polyester has a hydroxyl value of from 20 to 120 mg KOH/g and an acid value of less than 5 mg KOH/g, and a silicone content of from 20% to 70% by weight based on the weight of the silicone-modified polyester; (B) from 5% to 20% of the solid blocked polyisocyanate crosslinker selected from the group consisting of the blocked polyisocyanate based on hydrogenated MDI, the blocked polyisocyanate based on a mixture of hydrogenated MDI and HDI, or mixtures thereof; and (C) from 1% to 10% of the solid hydroxyl functional polyester.

In addition to the components described above, the coating composition useful in the present invention may further comprise one or more of the following additives: leveling agents, degassing agents, solid epoxy resins, and curing catalysts. These additives may be present in the coating composition, by weight based on the total weight of the coating composition, in a total amount of from zero to 5%, from 0.1% to 3%, from 0.5% to 2%, or from 1% to 1.5%.

The coating composition useful in the present invention can be prepared by admixing the hydroxyl functional silicone-modified polyester (A) with the crosslinker (B) and the hydroxyl functional polyester (C), and optionally any other optional components described above such as pigments (D) and fillers (E). The components in the coating composition may be dry blended and heated, such as by melt blending, to form a viscous liquid mixture. "Melt blending" herein mean that the silicone polyester resin, the crosslinker, and any other components are melt mixed. Preferably, the components are melt mixed in an extruder such as a twin-screw extruder. Melt mixing can be conducted at temperatures in the range of from 70 to 130 °C, from 80 to 120 °C, or from 90 to 110 °C. The resulting molten mixture is then allowed to cool to form solid particulates, such as flakes or powders, which comprises a uniform mixture of components in the coating composition. The resulting coating composition may be further chopped or ground to suitable powder size for electrostatic spray coating. The formed powder can be applied to, or adhered to, a metal substrate. Examples of suitable metal substrates include aluminum, stainless steel, and iron. The coating composition can be applied to a substrate by electrostatic spray coating such as electrostatic bell application. After the coating composition has been applied to a substrate, the powder deposited on the substrate is cured to form a film (that is, coating) at an elevated temperature ranging from 170 to 230 °C, from 165 to 225 °C, or from 160 to 220 °C for from 5 to 30 minutes or from 10 to 25 minutes. The coating may have a film thickness ranging from 20 to 80 microns (μm), from 30 to 70 μm, or from 40 to 60 μm. The coating may have one or more of the following properties, i) gloss (60°) > 80, ii) good appearance; iii) good leveling with rating ≥4, iv) adhesion on steel substrate by crosscut ≥4B; v) passing direct impact resistance at 50 kilogram-centimeter (kg·cm); vi) reverse impact resistance <30% coating films showing peeling off and/or cracking at 50 kg cm; and vii) good heat resistance, as indicated by a gloss retention ≥80% after baking at 300 °C for 3 hours and/or adhesion on steel substrate by crosscut ≥4B after baking at 300 °C for 3 hours. These properties can be measured according to the test methods described in the Examples section below.

EXAMPLES

Some embodiments of the invention will now be described in the following Examples, wherein all parts and percentages are by weight unless otherwise specified. The following materials are used in the examples:

| Component | Description* | Source |
|---|---|---|
| Phenyltriethoxysilane | $C_6H_5Si(OCH_2CH_3)_3$, alkoxyl silane | Dow Silicones Corporation |
| Hexamethyldisiloxane | $(CH_3)_3Si-O-Si(CH_3)_3$, siloxane | |
| Octamethylcyclotetrasiloxane | $[(CH_3)_2SiO]_4$, cyclic siloxane | |
| Silicone Resin A | $T^{Pr}T^{Ph}$ silicone resin ($M_n$ measured by GPC: 1700 g/mol) with 6.2 wt% -OH, 45 mol% -OH residual, and each molecule having 6 -OH groups. | |
| Silicone Resin B | $T^{Me}T^{Ph}Q$ silicone resin ($M_n$ measured by GPC: 1420 g/mol) with 25.7 wt% -OEt, 75 mol% -OEt residual, and each molecule having 8 -OEt groups | |
| Silicone Resin C | $T^{Me}T^{Ph}Q$ silicone resin ($M_n$ measured by GPC: 850 g/mol) with 27wt% -OEt and -OH, 74 mol% -OEt and 13 mol% -OH residual, and each molecule having 4.76 -OEt groups and 1 -OH group | |
| Silicone Resin D | $T^{Ph}$ silicone resin ($M_n$ measured by GPC: 1720 g/mol) with 5.1 wt% -OH, 40 mol% -OH residual, and each molecule having 5 -OH groups. | |

| Component | Description* | Source |
|---|---|---|
| SILRES™ IC678 | $T^{Ph}$ silicone resin ($M_n$ measured by GPC: 633 g/mol) with 20.4 wt% -OMe, 100 mol% -OMe, and each molecule having 4.2 -OMe groups | Wacker Chemie AG |
| SILRES REN168 | $DTT^{Ph}$ silicone resin ($M_n$ measured by GPC: 1058 g/mol) with 5.2 wt% -OH, 50 mol% -OH, and each molecule having 4 -OH groups | |

*$T^{Pr}$ denotes $CH_3CH_2CH_2SiO_{3/2}$, $T^{Ph}$ denotes $C_6H_5SiO_{3/2}$, D denotes $(CH_3)_2SiO_{2/2}$, T denotes $CH_3SiO_{3/2}$, $T^{Me}$ denotes $CH_3SiO_{3/2}$, Q denotes $(SiO_{4/2})$, -OEt denotes -$OCH_2CH_3$, and -OMe denotes -$OCH_3$;

Number of groups in each molecule refers to the number average molecular functionality as determined according to equation 1; wt% of -OMe or -OEt refers to *w(OX)* as determined by equation 2; wt% of -OH refers to *w(OH)* as determined by equation 3; mol% of -OMe or -OEt refers to *m(OX)* as defined in equation 1; and mol% of -OH refers to *m(OH)* as defined in equation 1.
SILRES is a trademark of Wacker Chemie AG.

EP 4 259 695 B1

KOH solution (base catalyst), 37% HCl (acid catalyst), triflic acid (TfOH) catalyst, neopentyl glycol (NPG), isophthalic acid (IPA), and monobutyltin oxide esterification catalyst, trimethylolpropane (TMP), terephthalic acid (TPA), maleic anhydride (MA), and trimellitic anhydride (TMA) are all available from Sinoreagent.

CRELAN™ NW-5, available from Covestro, is a blocked cycloaliphatic polyisocyanate based on hydrogenated methylene diphenyl diisocyanate (MDI) and used as a crosslinker (CRELAN is a trademark of Covestro Deutschland AG).

CRELAN EF 403, available from Covestro, is a cycloaliphatic polyuretdione and used as a crosslinker.

VESTAGON™ B1530, available from Evonik, is a blocked IPDI and used as a crosslinker (VESTAGON is a trademark of Evonik Industries AG).

KHUA GH-6603 hydroxyl functional polyester powder (OHV=55 mg KOH/g), available from Zhejiang Guanghua Technology Company (China) is used as an adhesion promoter.

Iron oxide (pigment) is available from Lanxess.

Carbon black (pigment) is available from Cabot.

Barium sulfate ($BaSO_4$) filler is available from Shandong Zhenhua (China).

MODAFLOW™ Powder 2000, available from Allnex, is a solid acrylic polymer and used as a leveling agent (MODAFLOW is a trademark of Allnex).

Benzoin is available from VOK and used as a degassing agent.

The following standard analytical equipment and methods are used in the Examples and in determining the properties and characteristics stated herein:

NMR

$^{29}$Si and $^{13}$C nuclear magnetic resonance (NMR) technique described in US Patent 9,509,209, Reference Example 2 at col. 32 was used to measure molar ratios of M ($R_3SiO_{1/2}$), D ($R_2SiO_{2/2}$), T ($RSiO_{3/2}$), and Q ($SiO_{4/2}$) units, and OX and OH residuals in the silicone resin.

Haze Measurement

Make silicone-modified polyester resin samples with 2 millimeters (mm) thickness and conduct haze measurement by KONICA MINOLTA Spectrophotometer CM-5, according to ASTM D1003-97(c). Describe any defects or features of the resin appearance.

GPC

The chromatographic equipment consisted of a Waters 2695 Separations Module equipped with a vacuum degasser, and a Waters 2414 refractive index detector. The separation was made with three Styragel HR columns (300 mm × 7.8 mm) (molecular weight separation range of 100 to 4,000,000), preceded by a Styragel guard column (30 mm × 4.6 mm). The analyses were performed using certified grade tetrahydrofuran (THF) flowing at 1.0 milliliter per minute (mL/min) as the eluent, and the columns and detector were both heated to 35 °C. 1.0% wt. /v sample was prepared by weighing 0.050 g into a glass vial (8 mL) and diluting with 5 mL THF. Sample solution was transferred to a glass autosampler vial after filtered through 0.45 μm polytetrafluoroethylene (PTFE) filter. An injection volume of 100 microliters (μL) was used and data was collected for 37 minutes. Data collection and analyses were performed using Waters Empower GPC software. Molecular weight averages were determined relative to a calibration curve (3$^{rd}$ order) created using polystyrene standards covering the molecular weight range of 474 - 1,270,000.

Acid value (AV) and hydroxyl value (OHV)

Determine acid value according to ASTM D974-2006. Determine hydroxyl value according to ASTM E222-2010 (Test method B).

Film thickness

Measure film thickness of a coated panel using a film thickness gauge on bottom, middle and top of the panel and record the average number.

Leveling

A coating composition was applied to steel substrate with a thickness of 50-80 microns by electrostatic spray and then cured at 230 °C for 20 minutes. After cooling to room temperature, leveling properties are rated by 1 to 10 through visual checking the resulting coating films, where 1 is the worst and 10 is the best.

### Impact Resistance

Determine impact resistance according to GB/T 1732-1993 (Determination of impact resistance of films, testing condition: 50 kg·cm). Acceptable direct impact resistance is "Pass". Acceptable reverse impact resistance is "pass". Acceptable reverse impact resistance is <30% of coating films showing peeling off and/or cracking, preferably "pass". "Pass" means coating films are free from cracking or peeling off. "Fail" means coating films show cracking or peeling off. Damage degree was determined by the naked eye.

### Adhesion

Determine adhesion according to ASTM D 3359-97 Method B. The adhesion is rated according to the following criteria:

| Rating | Evaluation criteria |
|---|---|
| 0B | Flaking and detachment worse than Grade 1 |
| 1B | The coating has flaked along the edges of cuts in large ribbons and whole squares have detached. The area affected is 35% to 65% of the lattice. |
| 2B | The coating is flaked along the edges and on parts of the squares. The area affected is 15% to 35% of the lattice. |
| 3B | Small flakes of the coating are detached along edges and at intersections of cuts. The area affected is 5% to 15% of the lattice. |
| 4B | Small flakes of the coating are detached at intersections; less than 5% of the area is affected. |
| 5B | The edges of the cuts are completely smooth; none of the squares of the lattice is detached. |

### Gloss and Gloss Retention after Baking

Determine gloss according to ASTM D523-08. A test coated panel was measured for an initial gloss, denoted as *"Gloss$_{(initial)}$"*. The coated panel was baked at 300 °C for 3 hours and then tested for a final gloss after baking, denoted as *"Gloss$_{(final)}$"*. Gloss retention can be determined by ($Gloss_{(final)}$ / $Gloss_{(initial)}$)*100%.

### Example (Ex) 1 Silicone Resin 1

To a 4-neck flask (500 mL) equipped with a reflux condenser, a PTFE stirrer, nitrogen ($N_2$) inlet, and a thermometer was added phenyltriethoxysilane (360 g, 1.5mol) and hexamethyldisiloxane (40.5 g, 0.25 mol) and purged with $N_2$ for 10 minutes (min). The resulting mixture was stirred at 300 revolutions per minute (rpm) under $N_2$ for 10 min, followed by addition of 0.11 mL (0.0013 mol) TfOH. The flask was then fitted with a pressure-equalizing addition funnel containing DI water (31.5 g, 1.75 mol). DI water was added dropwise over 30 min at room temperature. After completion of addition of DI water, the contents of the flask were heated to 65 °C and held for 3 hours. Then 6.95 mL KOH/EtOH (ethanol) solution (0.5 mol/L) was added into the flask and heated to reflux (at 81 °C) for 1 hour. The contents of the flask were cooled to 65 °C and neutralized with HCl (0.20 mL, 37 wt%) for 1 hour. A Dean-Stark apparatus was then fitted to the flask and the contents of the flask were slowly heated to 125 °C to strip off by-product ethanol. The contents of the flask were kept at 125 °C for 2 hours, followed by vacuum distillation at 125 °C for another 2 hours. The contents of the flask were then cooled to 75 °C and filtered to give the silicone resin.

The obtained silicone resin had an average composition ratio determined by NMR analysis to be $((CH_3)_3SiO_{1/2})_{0.2}(C_6H_5SO_{3/2})_{0.8}(O_{1/2}CH_2CH_3)_{0.45}(O_{1/2}H)_{0.013}$, and a $M_n$ of 918 g/mol as measured by GPC, thus having 45 mol% ethoxy residuals to total silicon atoms (that is, molar percent of ethoxy groups relative to total moles of silicon atoms), a calculated average number of silicon bonded ethoxy groups per molecule of 3, and a calculated average number of silicon bonded OH groups per molecule of 0.1.

### Ex 2 Silicone Resin 2

To a 4-neck flask (500 mL) equipped with a reflux condenser, a PTFE stirrer, $N_2$ inlet and a thermometer was added phenyltriethoxysilane (136.8 g, 0.57 mol), octamethylcyclotetrasiloxane (10.36 g, 0.035 mol), and hexamethyldisiloxane (23.5 g, 0.145 mol), and purged with $N_2$ for 10 min. The resulting mixture was stirred at 300 rpm under $N_2$ for 10 min, followed by addition of 0.055 mL (0.0006 mol) TfOH. The flask was then fitted a pressure-equalizing addition funnel containing DI water (12.96 g, 0.705 mol). DI water was added dropwise over 30 min at room temperature. After completion of addition of DI water, the contents of the flask were heated to 65 °C and held for 3 hours. 3.08 mL KOH/EtOH solution (0.5 mol/L) was added into the flask and heated to reflux (at 81 °C) for 1 hour. The contents of the flask were cooled to 65 °C and neutralized with HCl (0.09 mL, 37 wt%) for 1 hour. Then a Dean-Stark apparatus was fitted to the flask and the contents of the flask were slowly heated to 125 °C to strip off by-product ethanol. The contents of the flask were kept at 125 °C for 2 hours, followed by vacuum distillation at 125 °C for another 2 hours. The contents of the flask were cooled to 75 °C and filtered to give the silicone resin.

The obtained silicone resin had an average composition ratio determined by NMR analysis to be $((CH_3)_3SiO_{1/2})_{0.3}((CH_3)_2SiO_{2/2})_{0.1}(C_6H_5SiO_{3/2})_{0.6}(O_{1/2}CH_2CH_3)_{0.3}$ and a $M_n$ of 843 g/mol as measured by GPC, thus having 30 mol% ethoxy residuals to total silicon atoms and a calculated average number of silicon bonded ethoxy groups per molecule of 2.1 (an average number of silicon bonded OH groups per molecule was 0).

Ex 3 Solid Hydroxyl Functional Silicone-modified Polyester (SMP) 1

To a 4-neck flask (500 mL) equipped with a reflux condenser, a PTFE stirrer, $N_2$ inlet, and a thermometer was added Silicone Resin 1 of Ex 1 (60 g) and NPG (43.65 g), followed by addition of monobutyltin oxide (0.05 g) as a catalyst. The flask was held at 170 °C for 2 hours, and then IPA (46.35 g) together with monobutyltin oxide (0.05 g) were added for esterification at 240 °C for 2 hours. The contents of the flask were cooled to 180 °C and a clear liquid without any gelation was obtained. The viscous liquid was then poured out and cooled to room temperature to give a clear and solid SMP (OHV=30 mg KOH/g, AV=2 mg KOH/g, silicone resin content=40 wt%) for further application testing.

Ex 4 Solid Hydroxyl Functional SMP 2

To a 4-neck flask (500 mL) equipped with a reflux condenser, a PTFE stirrer, $N_2$ inlet and a thermometer was added Silicone Resin 2 of Ex 2 (25 g) and NPG (35 g), followed by addition of monobutyltin oxide (0.3 g) as a catalyst. The flask was held at 170 °C for 2 hours, and then IPA (40 g) was added for esterification at 240 °C for 1.5 hours. followed by vacuum distillation at 240 °C for 30 min. The contents of the flask were cooled to 180 °C and a clear liquid without any gelation was obtained. The viscous liquid was then poured out and cooled to room temperature to give a clear and solid SMP (OHV=75 mg KOH/g, AV=3 mg KOH/g, silicone resin content =25 wt%) for further application testing.

Comparative (Comp) Ex A

To a 4-neck flask (500 mL) equipped with a reflux condenser, a PTFE stirrer, $N_2$ inlet and a thermometer was added NPG (300 g) and Silone Resin A (80 g), followed by addition of monobutyltin oxide (2 g) as a catalyst. The flask was held at 170 °C for 2 hours, and then IPA (600 g) was added for further esterification at 240 °C for 2 hours. The contents of the flask were cooled to 180 °C and gelation was formed in the flask. The resulting mixture was poured out and cooled to room temperature to give a translucent SMP with gel particles, which could not be used for further application testing.

Comp Ex B

To a 4-neck flask (500 mL) equipped with a reflux condenser, a PTFE stirrer, $N_2$ inlet and a thermometer was added TMP (17 g), Silone Resin A (100 g) and xylene (60 g), followed by addition of tetrabutyl titanate (TnBT, 0.585 g) as a catalyst. The flask was held at 140 °C for 3 hours to give a precursor.

The as prepared precursor (88.14 g), together with TMP (95 g), IPA (66.45 g), and AA (29.23 g) were added into another 4-neck flask and held at 180 °C for 1 hour and gelation occurred in the flask. Experiment failed.

Comp Ex C

To a 4-neck flask (500 mL) equipped with a reflux condenser, a PTFE stirrer, $N_2$ inlet and a thermometer was added NPG (222 g) and Silicone Resin B (60 g), followed by addition of monobutyltin oxide (2 g) as a catalyst. The flask was held at 170 °C for 2 hours, and then IPA (450 g) was added for further esterification at 240 °C for 2 hours. The contents of the flask were cooled to 180 °C and gelation was observed in the flask. The resulting mixture was poured out and cooled to room temperature to give a translucent SMP with gel particles, which could not be used for further application testing.

Comp Ex D

To a 4-neck flask (500 mL) equipped with a reflux condenser, a PTFE stirrer, $N_2$ inlet and a thermometer was added NPG (300 g) and Silicone Resin C (60 g), followed by addition of monobutyltin oxide (2 g) as a catalyst. The flask was held at 170 °C for 2 hours, and then IPA (570 g) was added for esterification at 240 °C for 2 hours. The contents of the flask were cooled to 180 °C and gelation was observed in the flask. The resulting mixture was poured out and cooled to room temperature to give a translucent SMP with gel particles, which could not be used for further application testing.

Comp Ex E

To a 4-neck flask (500 mL) equipped with a reflux condenser, a PTFE stirrer, $N_2$ inlet and a thermometer was added NPG (30 g) and Silicone Resin D (8 g), followed by addition of monobutyltin oxide (0.2 g) as a catalyst. The flask was held at 170 °C for 1.5 hours, and then IPA (50 g) was added for further esterification at 240 °C for 2 hours, followed by vacuum distillation for 40 min. The contents of the flask were cooled to 180 °C and gelation was observed in the flask. The resulting mixture was poured out and cooled to room temperature to give a translucent SMP with gel particles, which could not be used for further application testing.

Comp Ex F

To a 4-neck flask (500 mL) equipped with a reflux condenser, a PTFE stirrer, $N_2$ inlet and a thermometer was added NPG (40 g) and SILRES IC678 (60 g), followed by addition of monobutyltin oxide (0.15 g) as a catalyst. The flask was held at 170 °C for 2 hours, and then IPA (50 g) was added for esterification at 240 °C for 1.5 hours. Then bulk gelation was formed in the flask. Experiment failed.

Comp Ex G

To a 4-neck flask (500 mL) equipped with a reflux condenser, a PTFE stirrer, $N_2$ inlet and a thermometer was added NPG (40 g) and SILRES REN168 (60 g), followed by addition of monobutyltin oxide (0.15 g) as a catalyst. The flask was held at 170 °C for 2 hours, and then IPA (50 g) was added for esterification at 240 °C for 1.5 hours. Then bulk gelation was formed in the flask. Experiment failed.

As shown above, preparation of solid SMPs using conventional silicone resins all showed gelation (Comp Exs A-G). In contrast, the silicone resins as prepared in Exs 1 and 2 were used for preparing SMPs in the absence of a solvent, showing no gelation, and clear and solid SMPs were obtained (Exs 3 and 4).

Comp Ex C1

Step 1. NPG (25 g), the silicone resin as prepared in Ex 1 (39.5 g) and monobutyltin oxide (0.05 g) were added into a 4-neck flask (500 mL) equipped with a reflux condenser, a PTFE stirrer, $N_2$ inlet and a thermometer. The reaction temperature was set at 170 °C and held for 2 hours to give a clear liquid.

Step 2. IPA (35 g) was added into the flask. The flask was held at 240 °C for 2 hour and 30 min, during which the contents of the flask changed from milky white to translucent. The resulting mixture had an acid value of 14.46 mg KOH/g. Then vacuum distillation for the removal of water was conducted at 240 °C and the contents of the flask became hazy. The resulting resin was poured out and cooled to room temperature to give a hazy SMP resin.

Comp Ex C2

Step 1. NPG (26 g), the silicone resin as prepared in Ex 1 (40 g) and monobutyltin oxide (0.05 g) were added into a 4-neck flask (500 mL) equipped with a reflux condenser, a PTFE stirrer, $N_2$ inlet and a thermometer The reaction temperature was held at 170 °C for 2 hours until a clear resin was obtained.

Step 2. A portion of IPA (27.5 g) was added into the flask. The reaction temperature was set at 240 °C and held for 2 hours, during which the contents of the flask changed from milky white to clear.

Step 3. The flask temperature was decreased to 170 °C. Then another portion of IPA (6.45 g) was added into the flask for reaction for 1 hour and a translucent liquid was obtained. Vacuum distillation for removal of water was conducted at 170 °C for 45 mins. The resulting sample was poured out and cooled down to room temperature to give a hazy SMP resin.

Comp Ex C3

Step 1. NPG (25.4 g), the silicone resin as prepared in Ex 1 (38 g) and monobutyltin oxide (0.05 g) were added into a 4-neck flask (500 mL) equipped with a reflux condenser, a PTFE stirrer, $N_2$ inlet and a thermometer. The reaction temperature was set at 170 °C for 2 hours and the contents of the flask became clear.

Step 2. A portion of IPA (31.2 g) was added into the flask. The reaction temperature was set at 240 °C for 2 hours, during which the contents of the flask changed from milky white to translucent.

Step 3. Another portion of IPA (5.35 g) was added into the flask for further reacting at 240 °C for 1 hour to give a translucent mixture. Vacuum distillation for removal of water was conducted afterwards and gelation occurred.

Ex 5 Solid Carboxyl Functional SMP Resin

Step 1. NPG (26.4 g), the silicone resin as prepared in Ex 1 (40.6 g) and monobutyltin oxide (0.05 g) were added into a 4-neck flask (500 mL) equipped with a reflux condenser, a PTFE stirrer, $N_2$ inlet and a thermometer. The flask was held at 170 °C for 2 hours to give a clear liquid.

Step 2. IPA (27.9 g) was added into the flask. The flask was held at 240 °C for 2 hours, during which the contents of the flask changed from milky white to clear.

Step 3. The flask temperature was cooled down to 170 °C. Maleic anhydride (5.05 g) was then added into the flask and the reaction continued for 1 hour and a clear liquid was obtained. Vacuum distillation for removal of water was conducted at 170 °C for 45 min. The resulting product was poured out and cooled to room temperature to give a clear and solid SMP resin.

Ex 6 Solid Carboxyl Functional SMP Resin

Step 1. NPG (26.1 g), the silicone resin as prepared in Ex 1 (40.3 g) and monobutyltin oxide (0.05 g) were added into a 4-neck flask (500 mL) equipped with a reflux condenser, a PTFE stirrer, $N_2$ inlet and a thermometer. The flask was held at 170 °C for 2 hours and a clear liquid was obtained.

Step 2. IPA (25.1 g) was added into the flask. The flask was held at 240 °C for 2 hours, during which the contents of the flask changed from milky white to clear.

Step 3. The flask temperature was cooled down to 170 °C. Then TMA (8.45 g) was added into the flask and the reaction continued for 1 hour and a clear liquid was obtained. Vacuum distillation for removal of water was conducted at 170 °C for 45 min. The resulting product was poured out and cooled to room temperature to give a clear and solid SMP resin.

Properties of the obtained SMP resins above are given in Table 1. As shown in Table 1, the as prepared solid carboxyl functional SMP resins of Exs 5 and 6 both had measured acid numbers close to the theoretical acid numbers. It indicates that the starting material silicone resins were grafted into each of the final SMP resins homogenously, which is validated by GPC analyses showing only a single peak for each SMP resin. In contrast, the SMP resin obtained from Comp Ex C1 had an actual acid value of 5.84 mg KOH/g, which is much lower than the theoretical AV value, indicating not all of the starting material silicone resins were grafted into the SMP resin. It was also validated by GPC analysis which showed split peaks overlapping with the peak of the starting material silicone resin. The SMP resin obtained from Comp Ex C2 was hazy resin. Gelation occurred in the process of Comp Ex C3.

Table 1. Properties of SMP Resins

| SMP Resin | Comp Ex C1 | Comp Ex C2 | Comp Ex C3 | Ex 5 | Ex 6 |
|---|---|---|---|---|---|
| Appearance | Hazy | Hazy | Gelled | Clear | Clear |
| Haze (%) | 63.48 | 63.91 | - | 6.45 | 9.19 |
| Mw (g/mol)[1] | Mw (Peak 1): 855 Mw (Peak 2): 23,814 | 5,947 | - | 9,556 | 6,935 |
| Theoretical Acid Number (mg KOH/g)[2] | 35.6 | 31.36 | - | 35 | 35 |
| Actual Acid Number (mg KOH/g) | 5.84 | 16.03 | - | 27 | 30 |
| [1]Mw was measured by GPC described above. [2]Alkoxy groups in starting material silicone resin were counted as acid functionality. | | | | | |

Comp Exs C4-C7 and Exs 7-9 Powder Coating Compositions

For each powder coating composition, all components listed in Table 2 were mixed by a twin-screw extruder at temperatures of from 70 to 130 °C. The resulting flake type coating composition was ground to powders suitable for electrostatic spray coating. The above-prepared coating powders were applied by electrostatic spray on steel panels with a film thickness of 50-80 microns, without sanding, and then cured at 230 °C for 20 min. The resulting coated panels were evaluated according to the test methods described above and properties of coatings are given in Table 3.

Table 2. Powder Coating Compositions

| Ingredient | Units * | Comp Ex C4 | Comp Ex C5 | Comp Ex C6 | Ex 7 | Ex 8 | Comp Ex C7 | Ex 9 |
|---|---|---|---|---|---|---|---|---|
| SMP 1 as prepared in Ex 3 (OHV=3 0 mg KOH/g, silicone content=40 wt%) | wt% | 86 | 70 | 85.4 | 80.7 | 76 | 52.2 | 56.2 |
| CRELAN EF 403 crosslinker | wt% | 14 | | | | | | |
| VESTAGON B1530 crosslinker | wt% | | 16 | | | | 7.8 | |
| CRELAN NW-5 crosslinker | wt% | | | 14.6 | 15.05 | 15.6 | | 10.8 |
| KHUA GH-6603 hydroxyl functional polyester powder | wt% | | 14 | | 4.25 | 8.4 | | 3 |
| Iron oxide (pigment) | wt% | | | | | | 7 | 7 |
| Carbon black (pigment) | wt% | | | | | | 0.3 | 0.3 |
| Barium sulfate (filler) | wt% | | | | | | 31.3 | 21.3 |
| MODAFLOW Powder 2000 solid acrylic polymer (leveling agent) | wt% | | | | | | 1 | 1 |
| Benzoin (degassing agent) | wt% | | | | | | 0.4 | 0.4 |
| *wt% is relative to the total weight of the coating composition. | | | | | | | | |

As shown in Table 3, clear coatings made from the powder coating compositions of Comp Ex C4 using cycloaliphatic polyuretdione crosslinker and Comp Ex C5 using blocked polyisocyanate based on IPDI crosslinker failed on adhesion testing and impact testing. Clear coatings made from Comp Ex C6 didn't pass the reverse impact requirement. In contrast, clear coatings made from the powder coating compositions of Exs 7 and 8 both passed adhesion and impact testing.

Pigmented coating of Comp Ex C7 failed the adhesion and impact resistance testing before and after baking at 300 °C. In contrast, the powder coating compositions of Ex 9 passed adhesion and impact testing, and also showed high initial gloss and good leveling properties. Even after baking at 300 °C, the powder coating composition of Ex 9 still passed gloss retention and adhesion requirements, indicating better heat resistance than the powder coating composition of Comp Ex C7.

Table 3. Properties of Powder Coating

| Measurements | Criteria | Comp Ex C4 | Comp Ex C5 | Comp Ex C6 | Ex 7 | Ex 8 | Comp Ex C7 | Ex 9 |
|---|---|---|---|---|---|---|---|---|
| Film thickness | >50 μm | 58 | 56 | 54 | 58 | 59 | 54 | 75 |
| Adhesion | ≥4B | 0B | 3B | 4B | 5B | 5B | 2B | 4B |
| Direct impact | Pass | Fail | Fail | Pass | Pass | Pass | Fail | Pass |
| Reverse impact | <30% peeling off/cracking | Fail | Fail | 30% fail on center | Pass | Pass | Fail | 20% fail on center |
| Gloss (60°) | >80 | | | | | | 90.4 | 85 |
| Leveling | ≥4 | | | | | | 5 | 4 |

(continued)

| Measurements | Criteria | Comp Ex C4 | Comp Ex C5 | Comp Ex C6 | Ex 7 | Ex 8 | Comp Ex C7 | Ex 9 |
|---|---|---|---|---|---|---|---|---|
| Gloss retention after 300 °C/3 hours | ≥80% | | | | | | 90.2% | 84.1% |
| Adhesion after 300 °C/3 hours | ≥4B | | | | | | 2B | 4B |

**Claims**

1. A silicone resin of formula (I):

$$(RSiO_{3/2})_a \ (R_2SiO_{2/2})_b \ (R_3SiO_{1/2})_c \ (SiO_{4/2})_d \ (XO_{1/2})_e \ (HO_{1/2})_g \qquad (I)$$

   where each R is independently a monovalent hydrocarbon group having from 1 to 30 carbon atoms,
   each X is independently an alkyl group having from 1 to 5 carbon atoms,
   $a>0$, $b \geq 0$, $c>0$, $d\geq0$, $e>0$, $g\geq0$, $a/(a+b+c+d)$ is from 0.5 to 0.9, $b/a$ is from 0 to 1, $c/a$ is from 0.1 to 1, $d/a$ is from 0 to 0.25, and $e/(a+b+c+d)$ is from 0.2 to 2;
   wherein the silicone resin has an average number of silicon bonded alkoxy groups and silicon bonded hydroxyl groups per molecule in the range of from 2 to 4 and comprises less than 2% of silicon bonded hydroxyl groups, by weight based on the weight of the silicone resin;
   with the proviso that 50 mol% or more of silicon atoms in the silicone resin are connected to an aryl group.

2. The silicone resin of claim 1, having a number average molecular weight in the range of from 700 to 2,000 g/mol measured according to the method in the description.

3. The silicone resin of claim 1 or 2, comprising from 4.5% to 25% of silicon bonded alkoxy groups, by weight based on the weight of the silicone resin.

4. The silicone resin of any one of claims 1-3, wherein X in formula (I) is ethyl.

5. The silicone resin of any one of claims 1-4, wherein the average number of silicon bonded alkoxy groups and silicon bonded hydroxyl groups per molecule of the silicone resin is in the range of from 2.1 to 3.4.

6. The silicone resin of any one of claims 1-5, wherein the average number of silicon bonded hydroxyl groups per molecule is less than 1.

7. The silicone resin of any one of claims 1-6, wherein from 60 mol% to 85 mol% of silicon atoms in the silicone resin are connected to an aryl group.

8. A process for preparing a solid silicone-modified polyester, comprising

   (i) condensing starting material (a), the silicone resin of any one of claims 1-7, and starting material (b), a polyol, to form a carbinol functional silicone resin; and
   (ii) esterifying the carbinol functional silicone resin obtained from step (i) with starting material (c) selected from a group consisting of a polycarboxyl functional compound, an anhydride thereof, or mixtures thereof, thus forming a solid hydroxyl functional silicone-modified polyester having a hydroxyl value of from 20 to 120 mg KOH/g and an acid value of less than 5 mg KOH/g.

9. The process of claim 8, wherein the process is conducted in the substantial absence of a solvent.

10. The process of claim 8 or 9, wherein, in step (i), the molar ratio of hydroxyl groups in the polyol to total silicon bonded alkoxy and hydroxyl groups in the silicone resin is greater than 2.

11. The process of any one of claims 8-10, further comprising (iii) reacting the hydroxyl functional silicone-modified polyester obtained from step (ii) with starting material (d) an anhydride, thus forming a carboxyl functional silicone-modified polyester having an acid number of 10 to 60 mg KOH/g and a hydroxyl value of less than 5 mg KOH/g.

12. The process of any one of claims 8-11, wherein the silicone resin is present, by weight based on the total weight of starting materials, in an amount of from 20% to 70%.

**Patentansprüche**

1. Silikonharz nach Formel (I) ):

$$(RSiO_{3/2})_a \, (R_2SiO_{2/2})_b \, (R_3SiO_{1/2})_C \, (SiO_{4/2})_d \, (XO_{1/2})_e \, (HO_{1/2})_g \qquad\qquad (I)$$

wobei jedes R unabhängig eine einwertige Kohlenwasserstoffgruppe ist, die von 1 bis 30 Kohlenstoffatome aufweist,
jedes X unabhängig eine Alkylgruppe ist, die von 1 bis 5 Kohlenstoffatome aufweist,
$a>0$, $b \geq 0$, $c>0$, $d\geq0$, $e>0$, $g\geq0$, $a/(a+b+c+d)$ zwischen 0,5 und 0,9 liegt, $b/a$ zwischen 0 und 1 liegt, $c/a$ zwischen 0,1 und 1 liegt, $d/a$ zwischen 0 und 0,25 liegt und $e/(a+b+c+d)$ zwischen 0,2 und 2 liegt;
wobei das Silikonharz eine mittlere Anzahl an siliziumgebundenen Alkoxygruppen und siliziumgebundenen Hydroxylgruppen pro Molekül in dem Bereich von 2 bis 4 aufweist und weniger als 2 Gew.-% siliziumgebundene Hydroxylgruppen basierend auf dem Gewicht des Silikonharzes umfasst;
mit der Maßgabe, dass 50 Mol-% oder mehr der Siliziumatome in dem Silikonharz mit einer Arylgruppe verbunden sind.

2. Silikonharz nach Anspruch 1, das ein zahlenmittleres Molekulargewicht in dem Bereich von 700 bis 2.000 g/mol aufweist, gemessen gemäß dem Verfahren in der Beschreibung.

3. Silikonharz nach Anspruch 1 oder 2, umfassend von zu 4,5 Gew.-% bis 25 Gew.-% siliziumgebundene Alkoxygruppen basierend auf dem Gewicht des Silikonharzes.

4. Silikonharz nach einem der Ansprüche 1 bis 3, wobei X in Formel (I) Ethyl ist.

5. Silikonharz nach einem der Ansprüche 1 bis 4, wobei die mittlere Anzahl an siliziumgebundenen Alkoxygruppen und siliziumgebundenen Hydroxylgruppen pro Molekül des Silikonharzes in dem Bereich von 2,1 bis 3,4 liegt.

6. Silikonharz nach einem der Ansprüche 1 bis 5, wobei die mittlere Anzahl der siliziumgebundenen Hydroxylgruppen pro Molekül weniger als 1 beträgt.

7. Silikonharz nach einem der Ansprüche 1 bis 6, wobei von 60 Mol-% bis 85 Mol-% der Siliziumatome in dem Silikonharz mit einer Arylgruppe verbunden sind.

8. Prozess zum Herstellen eines festen silikonmodifizierten Polyesters, umfassend

   (i) Kondensieren eines Ausgangsmaterials (a), des Silikonharzes nach einem der Ansprüche 1 bis 7, und des Ausgangsmaterials (b), eines Polyols, um ein carbinolfunktionelles Silikonharz auszubilden; und
   (ii) Verestern des carbinolfunktionellen Silikonharzes, das aus Schritt (i) erhalten wird, mit dem Ausgangsmaterial (c), das aus der Gruppe ausgewählt wird, bestehend aus einer polycarboxylfunktionellen Verbindung, einem Anhydrid davon oder Mischungen davon, wodurch ein fester hydroxylfunktioneller, silikonmodifizierter Polyester ausgebildet wird, der eine Hydroxylzahl von 20 bis 120 mg KOH/g und eine Säurezahl von weniger als 5 mg KOH/g aufweist.

9. Prozess nach Anspruch 8, wobei der Prozess im Wesentlichen ohne Lösungsmittel durchgeführt wird.

10. Prozess nach Anspruch 8 oder 9, wobei in Schritt (i) das Molverhältnis von Hydroxylgruppen in dem Polyol zu den gesamten siliziumgebundenen Alkoxy- und Hydroxylgruppen in dem Silikonharz größer als 2 ist.

11. Prozess nach einem der Ansprüche 8 bis 10, ferner umfassend (iii) ein Reagieren des hydroxylfunktionellen, silikonmodifizierten Polyesters, das in Schritt (ii) erhalten wird, mit dem Ausgangsmaterial (d), einem Anhydrid, wodurch ein carboxylfunktioneller, silikonmodifizierter Polyester ausgebildet wird, der eine Säurezahl von 10 bis 60 mg KOH/g und einem Hydroxylwert von weniger als 5 mg KOH/g aufweist.

**12.** Prozess nach einem der Ansprüche 8 bis 11, wobei das Silikonharz, basierend auf dem Gesamtgewicht der Ausgangsmaterialien, in einer Menge von 20 Gew.-% bis 70 Gew.-% vorhanden ist.

**Revendications**

**1.** Résine de silicone de formule (I) :

$$(RSiO_{3/2})_a \ (R_2SiO_{2/2})_b \ (R_3SiO_{1/2})_C \ (SiO_{4/2})_d \ (XO_{1/2})_e \ (HO_{1/2})_g \hspace{2cm} (I)$$

où chaque R est indépendamment un groupe hydrocarboné monovalent ayant de 1 à 30 atomes de carbone, chaque X est indépendamment un groupe alkyle ayant de 1 à 5 atomes de carbone,
$a>0$, $b \geq 0$, $c>0$, $d\geq0$, $e>0$, $g\geq0$, $a/(a+b+c+d)$ va de 0,5 à 0,9, $b/a$ va de 0 à 1, $c/a$ va de 0,1 à 1, $d/a$ va de 0 à 0,25, et $e/(a+b+c+d)$ va de 0,2 à 2 ;
dans laquelle la résine de silicone a un nombre moyen de groupes alcoxy liés à du silicium et de groupes hydroxyle liés à du silicium par molécule dans la plage allant de 2 à 4 et comprend moins de 2 % de groupes hydroxyle liés à du silicium, en poids en fonction du poids de la résine de silicone ;
à condition que 50 % molaires ou plus d'atomes de silicium dans la résine de silicone soient reliés à un groupe aryle.

**2.** Résine de silicone selon la revendication 1, ayant une masse moléculaire moyenne en nombre dans la plage allant de 700 à 2000 g/mol mesurée selon le procédé dans la description.

**3.** Résine de silicone selon la revendication 1 ou 2, comprenant de 4,5 % à 25 % de groupes alcoxy liés à du silicium, en poids en fonction du poids de la résine de silicone.

**4.** Résine de silicone selon l'une quelconque des revendications 1 à 3, dans laquelle X dans la formule (I) est éthyle.

**5.** Résine de silicone selon l'une quelconque des revendications 1 à 4, dans laquelle le nombre moyen de groupes alcoxy liés à du silicium et de groupes hydroxyle liés à du silicium par molécule de la résine de silicone est dans la plage allant de 2,1 à 3,4.

**6.** Résine de silicone selon l'une quelconque des revendications 1 à 5, dans laquelle le nombre moyen de groupes hydroxyle liés à du silicium par molécule est inférieur à 1.

**7.** Résine de silicone selon l'une quelconque des revendications 1 à 6, dans laquelle de 60 % molaires à 85 % molaires d'atomes de silicium dans la résine de silicone sont reliés à un groupe aryle.

**8.** Processus permettant de préparer un polyester solide à modification silicone, comprenant

(i) la condensation d'un matériau de départ (a), la résine de silicone selon l'une quelconque des revendications 1 à 7, et d'un matériau de départ (b), un polyol, pour former une résine de silicone à fonctionnalité carbinol ; et
(ii) l'estérification de la résine de silicone à fonctionnalité carbinol obtenue par l'étape (i) avec un matériau de départ (c) choisi dans un groupe constitué par un composé à fonctionnalité polycarboxyle, un anhydride de celui-ci, ou des mélanges de ceux-ci, en formant ainsi un polyester solide à modification silicone à fonctionnalité hydroxyle ayant un indice d'hydroxyle allant de 20 à 120 mg de KOH/g et un indice d'acide inférieur à 5 mg de KOH/g.

**9.** Processus selon la revendication 8, dans lequel le processus est effectué en l'absence sensible d'un solvant.

**10.** Processus selon la revendication 8 ou 9, dans lequel, à l'étape (i), le rapport molaire des groupes hydroxyle dans le polyol au nombre total de groupes alcoxy et hydroxyle liés à du silicium dans la résine de silicone est supérieur à 2.

**11.** Processus selon l'une quelconque des revendications 8 à 10, comprenant en outre (iii) la réaction du polyester à modification silicone à fonctionnalité hydroxyle obtenu par l'étape (ii) avec un matériau de départ (d) un anhydride, en formant ainsi un polyester à modification silicone à fonctionnalité carboxyle ayant un indice d'acide de 10 à 60 mg de KOH/g et un indice d'hydroxyle inférieur à 5 mg de KOH/g.

12. Processus selon l'une quelconque des revendications 8 à 11, dans lequel la résine de silicone est présente, en poids en fonction du poids total de matériaux de départ, en une quantité allant de 20 % à 70 %.

**REFERENCES CITED IN THE DESCRIPTION**

**Patent documents cited in the description**

- WO 2019200555 A1

- US 9509209 B